# FASCICULE DE BREVET EUROPEEN

(11) **EP 2 449 371 B1**
(45) Date de publication et mention de la délivrance du brevet: **10.04.2019**
(21) Numéro de dépôt: 10737957.0
(22) Date de dépôt: 08.06.2010
(51) Int. Cl.: G01N 27/90

(54) **DISPOSITIF DE CONTRÔLE NON DESTRUCTIF D'UNE PIÈCE.**
VORRICHTUNG ZUR ZERSTÖRUNGSFREIEN ÜBERPRÜFUNG EINES WERKSTÜCKS
DEVICE FOR NON-DESTRUCTIVE TESTING OF A COMPONENT

(30) Priorité: 02.07.2009 FR 0954535
(43) Date de publication de la demande: 09.05.2012
(73) Titulaire: Safran Aircraft Engines, 75015 Paris (FR)
(72) Inventeur: MARCEAU, Christian, Armand, 77127 Lieusaint (FR); ROUFF, André, F-78990 Elancourt (FR)
(74) Mandataire: Intès, Didier Gérard André
(86) Numéro de dépôt international: PCT/FR2010/051124
(87) Numéro de publication internationale: WO 2011/001056

(56) Documents cités:
- EP-A- 0 907 077
- EP-A- 2 040 069
- US-A- 5 065 635
- US-A1- 2004 051 525
- US-B1- 6 608 478
- US-B1- 6 952 094

## Description

L'invention se rapporte à un dispositif de contrôle non destructif d'une pièce, opérant par déplacement d'un capteur en regard d'une partie à explorer. L'invention concerne notamment un tel contrôle par courants de Foucault, appliqué à la détection de défauts tels que des criques (petites crevasses) existant ou susceptibles d'apparaître à la surface de la pièce ou à une faible profondeur.

L'invention s'applique tout particulièrement au contrôle des pieds d'aubes d'une soufflante d'un moteur d'avion.

Dans une soufflante, les pieds d'aubes sont l'objet de sollicitations importantes, sous l'effet de la force centrifuge, de l'ordre de plusieurs tonnes. Les parties les plus exposées à la fatigue sont les zones de contact entre chaque pied d'aube et les nervures latérales de l'alvéole de la roue de rotor dans laquelle il est installé.

On sait que certains contrôles non destructifs sont possibles pour détecter ce type de défaut, par exemple les contrôles par ultrasons et surtout les contrôles par courants de Foucault. Des dispositifs de contrôle non destructif sont décrits dans les documents EP 2040069, US 6952094, US 6608478, US 2004051525 et EP 0907077.

Dans un tel cas de contrôle non destructif, une sonde abritant un capteur développant le phénomène que l'on désire exploiter, (par exemple une simple bobine alimentée en courant alternatif pour la détection par courants de Foucault, dans le cas d'une pièce métallique) doit être déplacée à la surface de la zone à contrôler. Le passage du capteur en regard d'une crique engendre une perturbation significative du signal reçu qui peut être visualisée, par exemple sur un oscilloscope. Pour une bonne exploration systématique de la surface à contrôler, il est nécessaire de bien maîtriser la trajectoire de la sonde par rapport à la pièce. On admet qu'à chaque trajectoire, une bande de quelques millimètres de large est correctement explorée. Par conséquent, pour explorer une certaine zone, la procédure la plus adaptée est de décrire plusieurs trajectoires parallèles espacées d'une distance donnée inférieure à la largeur d'une bande précitée, cette distance est choisie pour assurer un recouvrement suffisant entre les bandes.

A titre d'exemple, pour un pied d'aube d'une soufflante classique, les surfaces à contrôler, globalement rectangulaires, s'étendent sur toute la longueur du pied d'aube sur un centimètre de large environ. On doit donc définir plusieurs trajectoires parallèles décalées, par exemple six trajectoires parallèles s'étendant sur toute la longueur du pied d'aube. Les conséquences d'une rupture d'aube sont tellement graves qu'on cherche à systématiser les contrôles des pieds d'aube au cours des opérations de maintenance, pour détecter l'apparition de la moindre crique susceptible de constituer une amorce de rupture.

Jusqu'à présent, ce type de contrôle nécessitait un appareillage automatisé capable de définir rigoureusement les trajectoires tout en garantissant une bonne orthogonalité du capteur par rapport à la surface à contrôler, pendant toute la phase d'exploration de la surface à contrôler. De tels équipements sont coûteux et ne peuvent être installés dans toutes les unités de maintenance. C'est pourquoi, on cherche à développer un système manuel simple et performant permettant d'effectuer ce type de contrôle avec une bonne fiabilité même dans les unités de maintenance les moins bien équipées.

L'invention permet d'atteindre cet objectif.

Plus particulièrement, l'invention concerne un dispositif de contrôle non destructif d'une pièce, par déplacement d'un capteur en regard d'une partie à explorer, caractérisé en ce qu'il comporte une sonde renfermant un tel capteur, montée articulée à l'extrémité d'un manche, un guide présentant une surface de référence et des moyens de réglage de la position dudit guide suivant une direction parallèle à un axe dudit manche.

Ainsi, le fait de pouvoir déplacer de façon contrôlée le guide par rapport à la sonde permet de définir les différentes trajectoires parallèles en prenant appui sur une même surface de guidage de la pièce elle-même.

Comme mentionné précédemment, le capteur est avantageusement un capteur à courants de Foucault, pour le contrôle d'une pièce métallique.

De plus, pour le cas spécifique du contrôle d'un pied d'aube, il est avantageux de mettre à profit le profil constant de celui-ci, pour faciliter le guidage de la sonde et la définition des différentes trajectoires.

Autrement dit, le guide et la sonde sont conformés respectivement pour venir en contact avec une surface radiale interne d'un pied d'aube et avec une surface radiale externe adjacente du même pied d'aube.

Selon l'invention, le guide a la forme générale d'un manchon coaxial audit manche d'où émerge ladite sonde.

Pour une bonne adaptation de la position de la sonde et notamment pour faire en sorte que le capteur soit toujours sensiblement perpendiculaire à la surface à explorer, le dispositif est avantageusement caractérisé en ce que ladite sonde est montée articulée à un support, pour pivoter selon un axe perpendiculaire à l'axe dudit manche et en ce que ledit support est installé dans le manchon, à une extrémité dudit manche.

Selon une autre caractéristique avantageuse, le manche comporte un tronçon fileté sur lequel est monté un écrou solidarisé audit manche. Ce tronçon fileté peut être tubulaire. Avantageusement, la paroi intérieure dudit tronçon fileté tubulaire est garnie d'un tube faisant saillie dans le manchon et constituant une partie dudit support de la sonde.

Selon une autre caractéristique avantageuse, ledit tube constitue un conduit de passage de fils électriques, lesdits fils étant reliés au capteur de la sonde.

L'invention sera mieux comprise et d'autres avantages de celle-ci apparaîtront plus clairement à la lumière de la description qui va suivre d'un dispositif de contrôle non destructif conforme à son principe, donnée uniquement à titre d'exemple et faite en référence aux dessins annexés, dans lesquels :

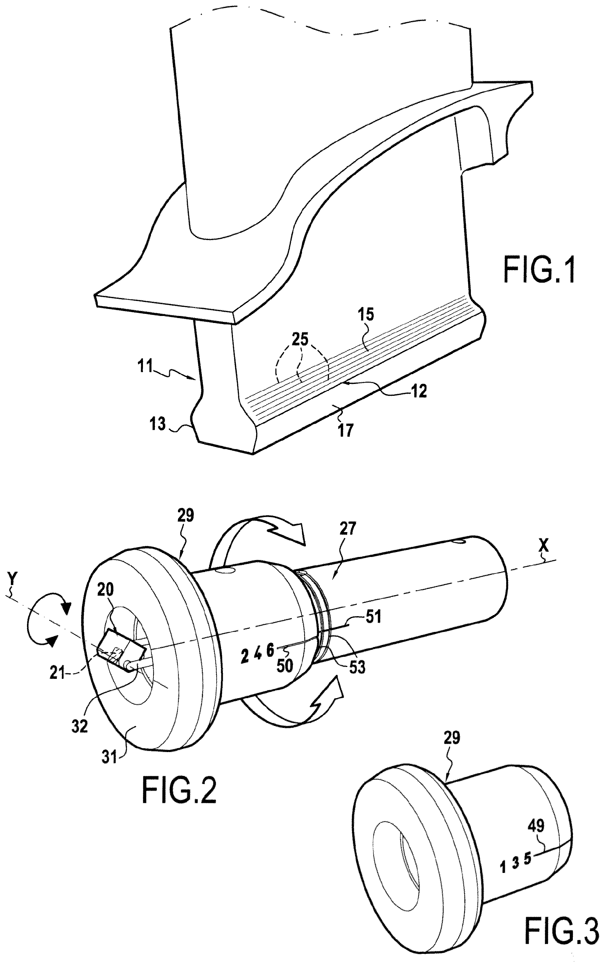

- la figure 1 est une vue en perspective d'un pied d'aube à contrôler ;
- la figure 2 est une vue en perspective du dispositif de contrôle conforme à l'invention ;
- la figure 3 illustre le guide de la figure 2, après rotation d'un demi-tour ;

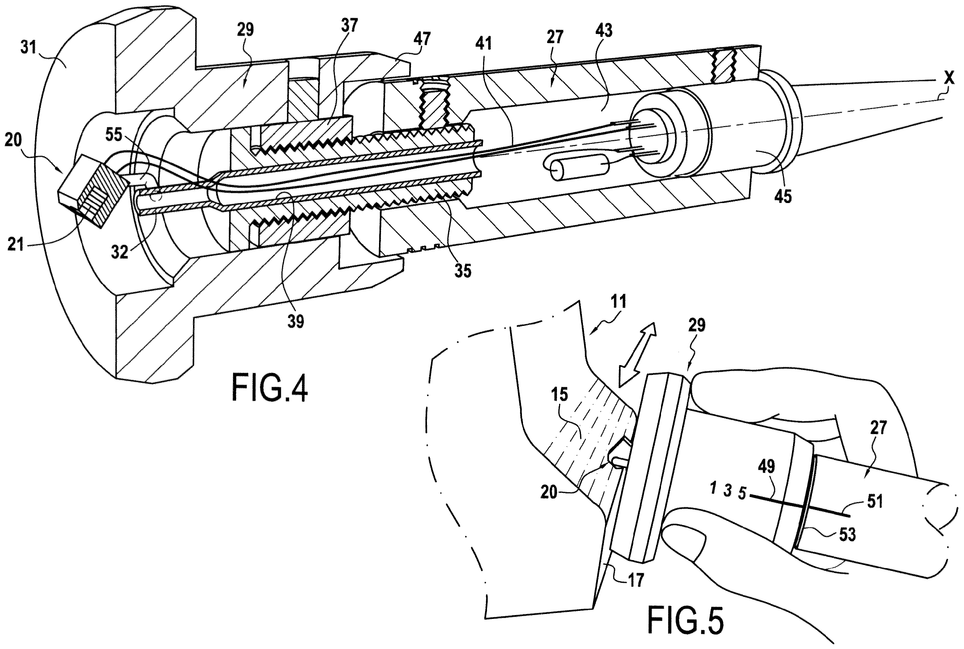

- la figure 4 est une vue en coupe longitudinale du dispositif de la figure 2 ; et
- la figure 5 illustre les opérations de contrôle.

Sur un pied d'aube 11 du type représenté, on distingue deux nervures latérales 12, 13 rectilignes destinées à retenir l'aube dans une alvéole de la roue de soufflante. Chaque nervure comporte une surface inclinée radiale externe 15 et une surface inclinée radiale interne 17. La surface 15 est la plus exposée car elle est en contact, sous l'effet de la force centrifuge, avec les nervures latérales correspondantes (non représentées) de l'alvéole de la roue de rotor. Selon une caractéristique avantageuse, la surface adjacente 17 peut servir de surface de guidage pour un contrôle manuel à l'aide d'une sonde de conception simple.

La partie à contrôler se présente donc ici comme un rectangle d'une certaine largeur constante s'étendant sur toute la longueur du pied d'aube.

On met en oeuvre ici le contrôle classique par courants de Foucault. On rappelle qu'une sonde contenant une bobine (capteur) alimentée en signal alternatif est déplacée, ici manuellement, le long d'une trajectoire définie sur la zone à contrôler. Le signal engendre des courants de Foucault dans la pièce métallique, en acier ou titane par exemple. Le signal surveillé pendant le déplacement relatif entre la pièce et la sonde est visualisé sur un oscilloscope sous la forme d'un point lumineux dont la position est à peu près stable tant que le capteur est déplacé en regard d'une surface homogène. Si le capteur passe en regard d'une hétérogénéité (crique apparente ou sous-jacente) le point se déplace brusquement en raison d'une variation rapide des courants de Foucault dans la pièce. Ce déplacement est l'indice de la présence d'une crique.

On rappelle que dans l'exemple décrit, chaque trajectoire 25 de la sonde permet de contrôler une bande étroite et qu'on a déterminé que ladite zone à explorer pouvait être efficacement contrôlée en définissant six trajectoires parallèles espacées d'une distance prédéterminée, le recouvrement des bandes explorées permettant de garantir une détection de toute crique.

Pour que le contrôle soit efficace et fiable, on a mis au point un dispositif de contrôle non destructif comportant une sonde 20 renfermant un capteur à courants de Foucault 21, montée articulée à l'extrémité d'un manche 27. De plus, ce manche est associé à un guide 29 présentant une surface de référence 31. Plus précisément, ledit guide 29 a la forme générale d'un manchon coaxial audit manche d'où émerge ladite sonde. Une extrémité de ce manchon présente une surface annulaire frontale constituant ladite surface de référence 31. Selon l'exemple, cette surface de référence est définie à l'extrémité d'une collerette élargie du manchon.

Le dispositif comporte en outre des moyens de réglage de la position dudit guide suivant une direction parallèle à un axe X dudit manche.

Comme représenté, la sonde 20 est montée sur un support 32. Plus précisément, elle est montée pour pivoter selon un axe Y perpendiculaire à l'axe X dudit manche. Le support 32 est installé dans le manchon à une extrémité du manche 27. Le manchon formant le guide 29 est mobile par rapport au manche 27 et par conséquent par rapport à la sonde 20. A cet effet, le manche comporte un tronçon fileté 35 sur lequel est monté un écrou solidarisé au guide 29.

Le tronçon fileté 35 est tubulaire pour le passage des fils électriques. Avantageusement, la paroi intérieure du tronçon fileté tubulaire est garnie d'un tube 39 faisant saillie dans le manchon et constituant une partie du support 32 de la sonde. Ce tube constitue un conduit de passage des fils électriques 41 reliés au capteur 21 de la sonde 20. A l'autre extrémité, le tube 39 débouche dans une cavité axiale 43 du manche et les fils électriques sont reliés aux cosses d'un connecteur 45 situé à l'extrémité arrière du manche 27. Après traitement, le signal peut être affiché sur un oscilloscope non représenté.

Il apparaît que le manchon formant le guide 29 comporte une jupe arrière 47 en recouvrement avec une partie cylindrique du manche 27. Par conséquent, le vissage ou dévissage du manchon se traduit par une position ajustable de la sonde 20 par rapport à la surface de référence 31, qui peut facilement être mesurée par le déplacement de l'extrémité de la jupe 47 en regard du manche. Ainsi, pour définir les six trajectoires parallèles permettant l'exploration de toute la surface à contrôler, on a déterminé le pas de vis pour passer d'une trajectoire à une autre en un demi-tour de rotation du manchon. Ainsi, le manchon porte deux traits 49, 50 diamétralement opposés, l'un des traits 49 correspond aux trajectoires impaires, 1, 3 et 5 tandis que l'autre 50 correspond aux trajectoires paires 2, 4 et 6. Par ailleurs, le manche comporte un trait 51 et six marques circulaires 53 parallèles correspondant aux six trajectoires. Pour passer d'une trajectoire à une autre, il suffit de tourner le manchon d'un demi-tour et le bord arrière de celui-ci passe d'une marque circulaire à la suivante.

La partie avant du tube 39, rétrécie, accueille l'élément de pivotement de la sonde qui comporte deux branches 55 opposées formant une sorte de fourche et définissant un axe de pivotement Y autour duquel la sonde est assujettie à pivoter. Celle-ci comporte des facettes planes inclinées assurant le bon positionnement de la sonde sur la surface à contrôler. Dans cette position, on est assuré que la bobine 21 constituant le capteur a son axe sensiblement perpendiculaire à la surface à contrôler. Lorsque la surface frontale constituant ladite surface de référence 31 est en contact avec la surface 17 du pied d'aube alors, la sonde est en contact avec la surface 15 du pied d'aube et avec son orientation voulue. Pour chaque trajectoire, le contrôle s'effectue de préférence en deux passes en partant du milieu du pied d'aube vers une extrémité puis vers l'autre.

## Revendications

1. Dispositif de contrôle non destructif d'une pièce, par déplacement d'un capteur (21) en regard d'une partie à explorer, le dispositif comportant une sonde (20) renfermant un tel capteur (21), montée articulée à l'extrémité d'un manche (27), un guide (29) présentant une surface de référence (31) et des moyens de réglage de la position dudit guide suivant une direction parallèle à un axe (X) dudit manche, dans lequel ledit guide (29) a la forme générale d'un manchon coaxial audit manche (27) d'où émerge ladite sonde, une extrémité de ce manchon présentant une face annulaire frontale constituant ladite surface de référence (31).

2. Dispositif selon la revendication 1, **caractérisé en ce que** ladite sonde est montée articulée à un support (32), pour pouvoir pivoter selon un axe (Y) perpendiculaire à l'axe (X) dudit manche et **en ce que** ledit support est installé dans le manchon à une extrémité dudit manche.

3. Dispositif selon la revendication 1 ou 2, **caractérisé en ce que** ledit manche (27) comporte un tronçon fileté (35) sur lequel est monté un écrou (37) solidarisé audit manchon.

4. Dispositif selon la revendication 3, **caractérisé en ce que** ledit tronçon fileté (35) est tubulaire.

5. Dispositif selon la revendication 4, **caractérisé en ce que** la paroi intérieure dudit tronçon fileté tubulaire est garnie d'un tube (39) faisant saillie dans le manchon et constituant une partie dudit support.

6. Dispositif selon la revendication 5, **caractérisé en ce que** ledit tube (39) constitue un conduit de passage de fils électriques (41), lesdits fils électriques étant reliés au capteur (21) de ladite sonde.

7. Dispositif selon l'une des revendications précédentes, **caractérisé en ce que** ledit capteur est un capteur à courants de Foucault.

8. Dispositif selon l'une des revendications précédentes, **caractérisé en ce que** le guide (29) et la sonde (20) sont conformés respectivement pour venir en contact avec une surface radiale interne (17) d'un pied d'aube et avec une surface radiale externe (15) adjacente dudit pied d'aube.

## Patentansprüche

1. Vorrichtung zur zerstörungsfreien Überprüfung eines Werkstücks durch die Verschiebung eines Sensors (21) gegenüber einem zu untersuchenden Teil, wobei die Vorrichtung eine Sonde (20), die einen solchen Sensor (21) enthält und an dem Ende eines Schafts (27) gelenkig montiert ist, eine Führung (29), die eine Bezugsfläche (31) aufweist, und Mittel zum Einstellen der Position der Führung gemäß einer Richtung umfasst, die zu einer Achse (X) des Schafts parallel verläuft, wobei die Führung (29) die allgemeine Form einer Muffe aufweist, die sich zu dem Schaft (27) koaxial verhält, aus der die Sonde hervorsteht, wobei ein Ende dieser Muffe eine ringförmige Vorderseite aufweist, welche die Bezugsfläche (31) bildet.

2. Vorrichtung nach Anspruch 1, **dadurch gekennzeichnet, dass** die Sonde gelenkig an einem Träger (32) montiert ist, damit sie um eine Achse (Y) schwenken kann, die zu der Achse (X) des Schafts senkrecht verläuft, und dadurch, dass der Träger in der Muffe an einem Ende des Schafts eingebaut ist.

3. Vorrichtung nach Anspruch 1 oder 2, **dadurch gekennzeichnet, dass** der Schaft (27) einen Gewindeabschnitt (35) umfasst, auf dem eine Mutter (37) montiert ist, die mit der Muffe fest verbunden ist.

4. Vorrichtung nach Anspruch 3, **dadurch gekennzeichnet, dass** der Gewindeabschnitt (35) rohrförmig ist.

5. Vorrichtung nach Anspruch 4, **dadurch gekennzeichnet, dass** die Innenwand des rohrförmigen Gewindeabschnitts mit einem Rohr (39) versehen ist, das in die Muffe hervorsteht und einen Teil des Trägers bildet.

6. Vorrichtung nach Anspruch 5, **dadurch gekennzeichnet, dass** das Rohr (39) einen Durchgang für Stromkabel (41) bildet, wobei die Stromkabel mit dem Sensor (21) der Sonde verbunden sind.

7. Vorrichtung nach einem der vorhergehenden Ansprüche, **dadurch gekennzeichnet, dass** der Sensor ein Wirbelstromsensor ist.

8. Vorrichtung nach einem der vorhergehenden Ansprüche, **dadurch gekennzeichnet, dass** die Führung (29) und die Sonde (20) jeweils angepasst sind, um mit einer radial inneren Fläche (17) eines Schaufelfußes und mit einer angrenzenden radial äußeren Fläche (15) des Schaufelfußes in Kontakt zu kommen.

## Claims

1. A device for non-destructive testing of a part by moving a sensor (21) over a portion to be scanned, the device comprising a probe (20) containing such a sensor (21), the probe being hinge-mounted at the end of a handle (27), a guide (29) presenting a reference surface (31), and means for adjusting the position of said guide in a direction parallel to an axis (X) of said handle, wherein said guide (29) is generally in the form of a sleeve that is coaxial with said handle (27) from which said probe emerges, one end of the sleeve presenting an annular front face constituting said reference surface (31) .

2. A device according to claim 1, **characterized in that** said probe is hinge-mounted to a support (32) in order to be capable of pivoting about an axis (Y) perpendicular to the axis (X) of said handle, and **in that** said support is installed in the sleeve at one end of said handle.

3. A device according to claim 1 or claim 2, **characterized in that** said handle (27) includes a threaded segment (35) having mounted thereon a nut (37) that is secured to said sleeve.

4. A device according to claim 3, **characterized in that** said threaded segment (35) is tubular.

5. A device according to claim 4, **characterized in that** the inside wall of said tubular threaded segment is lined with a tube (39) projecting into the sleeve and constituting a portion of said support.

6. A device according to claim 5, **characterized in that** said tube (39) constitutes a duct for passing electric wires (41), said electric wires being connected to the sensor (21) of said probe.

7. A device according to any preceding claim, **characterized in that** said sensor is an eddy current sensor.

8. A device according to any preceding claim, **characterized in that** the guide (29) and the probe (20) are respectively shaped to come into contact with an inner radial surface (17) of a blade root and with an adjacent outer radial surface (15) of said blade root.
